# EUROPEAN PATENT APPLICATION

(11) **EP 3 236 621 A1**
(43) Date of publication of application: **25.10.2017**
(21) Application number: 15877641.9
(22) Date of filing: 30.10.2015
(51) Int. Cl.: H04L 12/70

(54) **DATA TRANSMISSION METHOD, NETWORK SERVER, USER TERMINAL AND SYSTEM**

(30) Priority: 12.01.2015 CN 201510014307
(71) Applicant: Huawei Technologies Co., Ltd., Longgang District Shenzhen, Guangdong 518129 (CN)
(72) Inventor: KONG, Weiqing, Shenzhen Guangdong 518129 (CN); ZHOU, Hong, Shenzhen Guangdong 518129 (CN)
(74) Representative: Maiwald Patentanwalts GmbH
(86) International application number: PCT/CN2015/093380
(87) International publication number: WO 2016/112728

(57) **Abstract**

Embodiments of the present invention disclose a data transmission method, including: obtaining congestion control algorithm determining information; determining, according to the congestion control algorithm determining information, a congestion control algorithm used in data transmission with the user terminal; and performing data transmission with the user terminal by using the congestion control algorithm. The embodiments of the present invention further provide a network server, a user terminal, and a system. In the embodiments of the present invention, a corresponding congestion control algorithm can be selected according to an access type and a network access mode of the user terminal, and TCP transmission efficiency is improved.

## Description

This application claims priority to Chinese Patent Application No. 201510014307.1, filed with the Chinese Patent Office on January 12, 2015 and entitled "DATA TRANSMISSION METHOD AND SYSTEM, NETWORK SERVER, AND USER TERMINAL", which is incorporated herein by reference in its entirety.

### TECHNICAL FIELD

Embodiments of the present invention relate to the communications field, and in particular, to a data transmission method and system, a network server, and a user terminal.

### BACKGROUND

Transmission Control Protocol (TCP, Transport Control Protocol) is the most frequently used network transmission protocol at present, and provides reliable end-to-end data transmission. With an increasing amount of transmitted information and increasingly complex network composition, there is an increasing high probability of network congestion. To avoid network congestion, a series of TCP-related congestion control algorithms is already put forward. The TCP congestion control algorithms are generally used to implement congestion avoidance and congestion control. The congestion avoidance is a preventive mechanism to avoid a network congestion state, so that a network runs in a high-throughput and low-delay state. The congestion control is a recovery mechanism to recover a network from a congestion state.

In an existing technical solution, a congestion control algorithm between a network server and a user terminal is always randomly selected by the network server. In this case, the congestion control algorithm selected by the network server may be inapplicable to the user terminal; therefore, TCP transmission efficiency decreases.

### SUMMARY

Embodiments of the present invention provide a data transmission method and system, a network server, and a user terminal, so that a corresponding congestion control algorithm can be selected according to an access type and a network access mode of the user terminal, and TCP transmission efficiency is improved.

In view of this, a first aspect of the present invention provides a data transmission method, including:
obtaining congestion control algorithm determining information;
determining, according to the congestion control algorithm determining information, a congestion control algorithm used in data transmission with the user terminal; and
performing data transmission with the user terminal by using the congestion control algorithm.

With reference to the first aspect in the embodiments of the present invention, in a first possible implementation manner, when the congestion control algorithm determining information includes at least one of a network adapter type of the user terminal, a network access mode of the user terminal, a service requirement of the user terminal, or first network status information, the determining, according to the congestion control algorithm determining information, a congestion control algorithm used in data transmission with the user terminal includes:
determining, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

With reference to the first possible implementation manner of the first aspect in the embodiments of the present invention, in a second possible implementation manner, when the congestion control algorithm determining information further includes a type of a congestion control algorithm determined by the user terminal, the determining, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal includes:
determining whether the congestion control algorithm determined by the user terminal is supported;
when the congestion control algorithm determined by the user terminal is supported, determining that the congestion control algorithm determined by the user terminal is the congestion control algorithm used in the data transmission with the user terminal; and
when the congestion control algorithm determined by the user terminal is not supported, determining, according to the correspondence between the congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

With reference to the first aspect or the first or the second possible implementation manner of the first aspect, in a third possible implementation manner, during the data transmission with the user terminal by using the congestion control algorithm, the method further includes:
obtaining second network status information on a communication path between the user terminal and a server;
calling an application programming API interface according to the second network status information, where the API interface is used to modify a Transmission Control Protocol TCP parameter; and
modifying the TCP parameter by using the API interface.

A second aspect of the present invention provides a data transmission method, including:
obtaining at least one of a network adapter type, a network access mode, or a service requirement of a user terminal by using an existing API interface or a newly created API interface;
sending the at least one of the network adapter type, the network access mode, or the service requirement of the user terminal to a network server, so that the network server determines a congestion control algorithm according to the at least one of the network adapter type, the network access mode, or the service requirement; and
performing data transmission with the network server by using the congestion control algorithm.

With reference to the second aspect in the embodiments of the present invention, in a first possible implementation manner, after the obtaining at least one of a network adapter type, a network access mode, or a service requirement of the user terminal by using an existing API interface or a newly created API interface, the method further includes:
determining, according to the at least one of the network adapter type, the network access mode, or the service requirement of the user terminal, a congestion control algorithm corresponding to the at least one of the network adapter type, the network access mode, or the service requirement of the user terminal; and
the sending the at least one of the network adapter type, the network access mode, or the service requirement of the user terminal to a network server includes:
   sending the at least one of the network adapter type, the network access mode, or the service requirement of the user terminal, and the corresponding congestion control algorithm to the network server.

A third aspect of the present invention provides a network server, including:
a first obtaining module, configured to obtain congestion control algorithm determining information;
a first determining module, configured to determine, according to the congestion control algorithm determining information, a congestion control algorithm used in data transmission with the user terminal; and
a first transmission module, configured to perform data transmission with the user terminal by using the congestion control algorithm.

With reference to the third aspect in the embodiments of the present invention, in a first possible implementation manner, the determining module is specifically configured to: when the congestion control algorithm determining information includes at least one of a network adapter type of the user terminal, a network access mode of the user terminal, a service requirement of the user terminal, or first network status information, determine, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

With reference to the first possible implementation manner of the third aspect in the embodiments of the present invention, in a second possible implementation manner, the first determining module includes:
a judgment unit, configured to determine whether a congestion control algorithm determined by the user terminal is supported;
a first determining unit, configured to: when the congestion control algorithm determined by the user terminal is supported, determine that the congestion control algorithm determined by the user terminal is the congestion control algorithm used in the data transmission with the user terminal; and
a second determining unit, configured to: when the congestion control algorithm determined by the user terminal is not supported, determine, according to the correspondence between the congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

With reference to the third aspect or the first or the second possible implementation manner of the third aspect, in a third possible implementation manner, the network server further includes:
a second obtaining module, configured to obtain second network status information on a communication path between the user terminal and the server;
a calling module, configured to call an application programming API interface according to the second network status information, where the API interface is used to modify a Transmission Control Protocol TCP parameter; and
a modification module, configured to modify the TCP parameter by using the API interface.

A fourth aspect of the present invention provides a user terminal, including:
a third obtaining module, configured to obtain at least one of a network adapter type, a network access mode, or a service requirement of the user terminal by using an existing API interface or a newly created API interface;
a first sending module, configured to send the at least one of the network adapter type, the network access mode, or the service requirement of the user terminal to a network server, so that the network server determines a congestion control algorithm according to the at least one of the network adapter type, the network access mode, or the service requirement; and
a second transmission module, configured to perform data transmission with the network server by using the congestion control algorithm.

With reference to the fourth aspect in the embodiments of the present invention, in a first possible implementation manner, the user terminal further includes:
a second determining module, configured to determine, according to the at least one of the network adapter type, the network access mode, or the service requirement of the user terminal, a congestion control algorithm corresponding to the at least one of the network adapter type, the network access mode, or the service requirement of the user terminal; and
the first sending module includes:
   a sending unit, configured to send the at least one of the network adapter type, the network access mode, or the service requirement of the user terminal, and the corresponding congestion control algorithm to the network server.

A fifth aspect of the present invention provides a data transmission system, including a network server and a user terminal, where:
the network server is the network server according to the third aspect or the first or the second or the third possible implementation manner of the third aspect; and
the user terminal is the user terminal according to the third aspect or the first possible implementation manner of the third aspect.

It can be learned from the foregoing technical solutions that the embodiments of the present invention have the following advantages:

In the embodiments of the present invention, a network server obtains information sent by a user terminal, and with reference to a congestion control algorithm supported by the network server, selects a congestion control algorithm to be finally used. The network server uses the congestion control algorithm to perform TCP transmission. The network server selects different congestion control algorithms according to different pieces of received information, and performs TCP transmission according to a specific terminal type and network access mode, so as to improve TCP transmission efficiency.

### BRIEF DESCRIPTION OF DRAWINGS

FIG. 1 is a schematic diagram of an embodiment of a data transmission method according to embodiments of the present invention;
FIG. 2 is a schematic diagram of another embodiment of a data transmission method according to embodiments of the present invention;
FIG. 3 is a schematic diagram of an embodiment of a network server according to embodiments of the present invention;
FIG. 4 is a schematic diagram of another embodiment of a network server according to embodiments of the present invention;
FIG. 5 is a schematic diagram of another embodiment of a network server according to embodiments of the present invention;
FIG. 6 is a schematic diagram of an embodiment of a user terminal according to embodiments of the present invention;
FIG. 7 is a schematic diagram of another embodiment of a user terminal according to embodiments of the present invention;
FIG. 8 is a schematic structural diagram of a network server according to an embodiment of the present invention;
FIG. 9 is a schematic structural diagram of a user terminal according to an embodiment of the present invention; and
FIG. 10 is a schematic diagram of an embodiment of a data transmission system according to embodiments of the present invention.

### DESCRIPTION OF EMBODIMENTS

Embodiments of the present invention provide a data transmission method and system, a network server, and a user terminal that are used in TCP transmission according to a specific terminal type and network access mode, so as to improve TCP transmission efficiency.

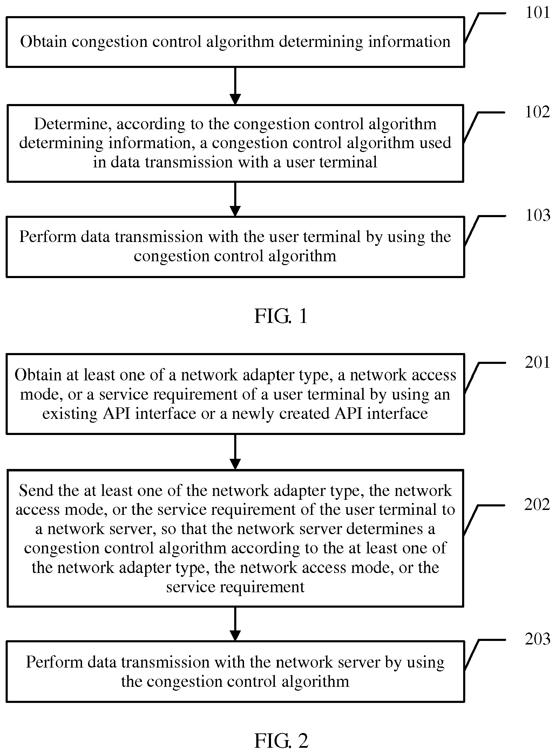

Referring to FIG. 1, an embodiment of a data transmission method in the embodiments of the present invention includes the following steps.

101. Obtain congestion control algorithm determining information.

In this embodiment, a network server obtains the congestion control algorithm determining information.

Generally, when network resource requirements are greater than available resources, network performance deteriorates, that is, congestion occurs. A congestion control algorithm can effectively avoid or relieve congestion.

102. Determine, according to network characteristic information, a congestion control algorithm used in data transmission with a user terminal.

In this embodiment, after receiving the congestion control algorithm determining information, the network server determines, according to the congestion control algorithm determining information, a specific congestion control algorithm used in data transmission with the user terminal.

103. Perform data transmission with the user terminal by using the congestion control algorithm.

In this embodiment, after the congestion control algorithm used in the data transmission with the user terminal is determined, the congestion control algorithm may be used to perform data transmission with the user terminal.

It may be understood that TCP is used as a data transmission protocol in this embodiment. In actual application, Internet Protocol (IP, Internet Protocol) or another data transmission protocol may be used as a data transmission protocol. This is not limited herein.

In this embodiment of the present invention, a network server obtains information sent by a user terminal, and with reference to a congestion control algorithm supported by the network server, selects a congestion control algorithm to be finally used. The network server uses the congestion control algorithm to perform TCP transmission. The network server selects different congestion control algorithms according to different pieces of received information, and performs TCP transmission according to a specific terminal type and network access mode, so as to improve TCP transmission efficiency.

It should be noted that, in the foregoing embodiment, the congestion control algorithm used in the data transmission with the user terminal may be determined in multiple manners. For ease of understanding, the following separately gives descriptions.

1. The network server determines, according to at least one of a network adapter type of the user terminal, a network access mode of the user terminal, a service requirement of the user terminal, or first network status information, the congestion control algorithm used in the data transmission with the user terminal.

Optionally, on the basis of the embodiment corresponding to FIG. 1, in a first optional embodiment of the data transmission method provided in the embodiments of the present invention, when the congestion control algorithm determining information includes at least one of a network adapter type of the user terminal, a network access mode of the user terminal, a service requirement of the user terminal, or first network status information, the determining, according to the congestion control algorithm determining information, a congestion control algorithm used in data transmission with the user terminal includes:
determining, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

In this embodiment, the user terminal obtains the network adapter type, the network access mode, and the user service requirement of the user terminal by using an API interface of an OPENTCP protocol, and sends, to the network server side by using options options in a handshake signal (SYN, Synchronous) packet used during TCP or IP connection establishment, information that carries the network adapter type, the network access mode, and the user service requirement. The network server side receives and parses the options options information in the SYN packet to obtain the network adapter type, the network access mode, and the user service requirement of the user terminal.

In addition, the user terminal may further obtain second network status information on a communication path between the user terminal and the server. It should be noted that, the second network status information may be a packet loss rate on the communication path between the user terminal and the server, or may be other network status information, such as a bandwidth or delay parameter. This is not limited herein.

It may be understood that, the user terminal may send the network characteristic information to the network server in multiple manners in addition to sending the network characteristic information to the network server by using the options options of the SYN packet. This is not limited herein.

In this embodiment, after receiving at least one of the network adapter type, the network access mode, the user service requirement, or the first network status information on the communication path between the user terminal and the server, the network server may determine that a congestion control algorithm corresponding to the at least one piece of the information is the congestion control algorithm used in the data transmission with the user terminal.

It should be noted that a congestion control algorithm and each piece of information received by the network server: the network adapter type, the network access mode, the user service requirement, or the first network status information on the communication path between the user terminal and the server may be in a one-to-one or one-to-more correspondence. For example, when an obtained network adapter type is a Universal Serial Bus (USB, Universal Serial Bus) network adapter, a corresponding congestion control algorithm A may be used, or according to a specific network status, a congestion control algorithm may be preferably selected from two corresponding congestion control algorithms A and B for use. The correspondence is not limited herein.

In addition, the network server in this embodiment may determine, according to the at least one of the network adapter type, the network access mode, the service requirement, or the first network status information, the congestion control algorithm used in the data transmission with the user terminal. In this way, an optimal congestion control algorithm may be flexibly selected according to actual application and a dynamic network to resolve a network congestion problem, so that the solution is more flexible and practical.

2. The network server determines, according to at least one of a type of a congestion control algorithm determined by the user terminal, a network adapter type of the user terminal, a network access mode of the user terminal, a service requirement of the user terminal, or first network status information, a congestion control algorithm used in data transmission with the user terminal.

Optionally, on the basis of the embodiment corresponding to FIG, 1, in a second optional embodiment of the data transmission method provided in the embodiments of the present invention, when the congestion control algorithm determining information further includes a type of a congestion control algorithm determined by the user terminal, the determining, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal includes:
determining whether the congestion control algorithm determined by the user terminal is supported;
when the congestion control algorithm determined by the user terminal is supported, determining that the congestion control algorithm determined by the user terminal is the congestion control algorithm used in the data transmission with the user terminal; and
when the congestion control algorithm determined by the user terminal is not supported, determining, according to the correspondence between the congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

In this embodiment, after receiving and parsing options options information in an SYN packet, the network server obtains a network adapter type, a network access mode, a user service requirement of a user terminal, and a type of a congestion control algorithm determined by the user terminal, and queries, by using an API of an OPENTCP protocol, whether the network server supports the congestion control algorithm selected by the user terminal. If it is determined, by means of query, that the network server supports the congestion control algorithm selected by the user terminal, the congestion control algorithm determined by the user terminal is determined as the congestion control algorithm used in the data transmission with the user terminal. However, when it is learned, by means of query, that the network server does not support the congestion control algorithm selected by the user terminal, a corresponding congestion control algorithm is selected according to at least one of the network adapter type of the user terminal, the network access mode of the user terminal, the user service requirement of the user terminal, or first network status information on a communication path between the user terminal and the server, and is determined as the congestion control algorithm used in the data transmission with the user terminal.

The congestion control algorithms may be classified into four types: a slow start algorithm, a congestion avoidance algorithm, a fast retransmit algorithm, and a fast recovery algorithm. The slow start algorithm refers to progressively increasing transmitted data to a value when transmission starts, that is, a send window increases exponentially to a congestion window value. The congestion avoidance algorithm means that when a congestion window value cannot increase exponentially, a congestion window linearly increases by 1 each time, so that network congestion caused by excessively fast growth can be avoided, and the congestion window value is slowly adjusted to an optimal value for a network. The fast retransmit algorithm means that during data transmission, data is divided into several packets, and each packet carries a sequence number. When a recipient receives an out-of-sequence packet segment, a duplicate acknowledgment is immediately sent. A sender can retransmit a packet segment that is not received in time as long as the sender continuously receives three pieces of duplicate acknowledgment information. The fast recovery algorithm is an algorithm in cooperation with the fast retransmit algorithm. When the sender continuously receives three pieces of duplicate acknowledgment information, an amount of data transmitted each time is reduced by a half, and a congestion window is also modified to that value. The congestion avoidance algorithm is then executed to enable the congestion window to increase slowly and linearly.

It should be noted that, the foregoing four algorithms are basic congestion control algorithms. The congestion control algorithm used in this embodiment may be one or more of the four types. This is not limited herein.

In addition, this embodiment provides a method for determining a final congestion control algorithm by determining whether a network server supports a congestion control algorithm selected by a user terminal, so as to improve operability and flexibility of the solution.

Optionally, on the basis of any of the embodiment corresponding to FIG. 1, the first optional embodiment, and the second optional embodiment, in a third optional embodiment of the data transmission method provided in the embodiments of the present invention, during the data transmission with the user terminal by using the congestion control algorithm, the method may further include:
obtaining second network status information on a communication path between the user terminal and a server;
calling an application programming API interface according to the second network status information, where the API interface is used to modify a Transmission Control Protocol TCP parameter; and
modifying the TCP parameter by using the API interface.

In this embodiment, the network server obtains intermediate network node information on the communication path between the user terminal and the server by using a network management system or a software-defined networking (SDN, Software Defined Network) controller. The network management system is also referred to as a network management system, and is a distributed network application system that combines software with hardware, and the software is the main component. A purpose of the network management system is to manage a network and enable the network to operate efficiently and normally. Network management objects generally include a router, a switch, and multiport forwarder.

It should be noted that the network server may obtain a packet loss rate at an egress of a network node by using the intermediate network node information on the communication path between the user terminal and the network server, and determine a corresponding congestion control algorithm according to the packet loss rate, or determine a congestion control algorithm according to other network status information such as bandwidth or a delay. This is not limited herein.

In this embodiment, the network server calls the API interface to modify the TCP parameter according to the packet loss rate on the communication path between the user terminal and the network server, or other network status information. In one modification manner, for a parameter that is not specifically implemented in an API interface function, the parameter may be extended according to an existing format; therefore, the TCP parameter is dynamically adjusted. The TCP parameter generally includes a congestion window, a receiving cache area size, and a sending cache area size. A user modifies these parameters in time according to a network status change by using the API interface.

It should be noted that, in this embodiment, a TCP parameter is modified by using an existing API interface or a newly created API interface. In actual application, the TCP parameter may be modified by using a general socket programming interface, or by using another TCP parameter modification manner that is based on a TCP flow.

Further, in this embodiment, the network server obtains network status information, and modifies a TCP parameter according to the information by using an API interface, so that a network adjustment policy can be determined in time according to the network status information, and the TCP parameter can be dynamically adjusted by using the API interface. In this way, TCP transmission efficiency is improved, the solution can be used more widely, and flexibility is further improved.

Data transmission of the present invention is described from a perspective of a network server in the foregoing embodiments. The following describes a data processing method of the present invention from a perspective of a user terminal. Referring to FIG. 2, another embodiment of a data transmission method of the present invention includes the following steps.

201. Obtain at least one of a network adapter type, a network access mode, or a service requirement of the user terminal by using an existing API interface or a newly created API interface.

In this embodiment, the user terminal obtains the network adapter type, the network access mode, or some user requirements of a user by using a newly created OPENTCP API interface, or may obtain, by using the existing API interface, some user service requirements that cannot be obtained by using the existing API interface. The OPENTCP API interface can be used as an extension of the existing API interface, and the user terminal needs to obtain at least one of the foregoing three types of information.

202. Send the at least one of the network adapter type, the network access mode, or the service requirement of the user terminal to a network server, so that the network server determines a congestion control algorithm according to the at least one of the network adapter type, the network access mode, or the service requirement.

In this embodiment, the user terminal sends, to the network server, the at least one of the network adapter type, the network access mode, or the user service requirement that is obtained by the user terminal, so that the network server determines the congestion control algorithm according to at least one of the information.

There are many common network access modes, such as an asymmetric digital subscriber line (ADSL, Asymmetric Digital Subscriber Line) network access mode, a cable modem network access mode, and an optical access network (OAN, Optical Access Network) mode. The ADSL network access mode ensures great confidentiality and high security. The cable modem network access mode is an Ethernet access mode with a high speed and high stability. The OAN network access mode may provide a high-speed broadband network only by transforming a drop cable, and this is convenient and fast.

203. Perform data transmission with the network server by using the congestion control algorithm.

In this embodiment, the user terminal performs data transmission with the network server according to the congestion control algorithm determined by the network server.

In this embodiment of the present invention, a user terminal obtains a network adapter type, a network access mode, or a user service requirement of the user terminal by using a newly created API interface or an existing API interface, and sends the information to a network server, so that the network server may determine, according to the information, a congestion control algorithm used in data transmission with the user terminal. The network server selects different congestion control algorithms according to different pieces of network characteristic information of the user terminal, and performs TCP transmission according to a specific network adapter type, a specific network access mode, or a specific user service requirement, so as to improve TCP transmission efficiency.

Optionally, on the basis of the embodiment corresponding to FIG. 2, in a first optional embodiment of the data transmission method provided in the embodiments of the present invention, after the obtaining at least one of a network adapter type, a network access mode, or a service requirement of the user terminal by using an existing API interface or a newly created API interface, the method may further include:
determining, according to the at least one of the network adapter type, the network access mode, or the service requirement of the user terminal, a congestion control algorithm corresponding to the at least one of the network adapter type, the network access mode, or the service requirement of the user terminal; and
sending the at least one of the network adapter type, the network access mode, or the service requirement of the user terminal, and the corresponding congestion control algorithm to the network server.

In this embodiment, the existing API interface may be used to obtain a congestion control algorithm and some user service requirements that are supported by a system, while the newly created OPENTCP API interface may be used to obtain the network adapter type of the user terminal, the network access mode of the user terminal, and some user service requirements that cannot be obtained by using the existing API interface. The congestion control algorithm supported by the system is then sent to the network server. The network server determines, with reference to a congestion control algorithm supported by the network server, whether the congestion control algorithm sent by the user terminal is supported. If the congestion control algorithm sent by the user terminal is supported, the congestion control algorithm may be directly used to perform data transmission. However, if the congestion control algorithm sent by the user terminal is not supported, the network server reselects an optimal congestion control algorithm according to at least one of the network adapter type, the network access mode, or the user service requirement that is sent by the user terminal, and determines the reselected congestion control algorithm as a final congestion control algorithm used in data transmission.

In addition, the user terminal in this embodiment of the present invention may determine, according to a network adapter type, a network access mode, and a user service requirement, a congestion control algorithm corresponding to the network adapter type and the network access mode of the user terminal. If a network server supports the congestion control algorithm, the congestion control algorithm is the optimal choice; otherwise, the network server selects a second-optimal congestion control algorithm to perform data transmission. Feasibility of the solution is improved, an actual application effect is better, and TCP transmission efficiency is improved.

For ease of understanding, the following describes in detail a network processing method of the present invention by using a specific application scenario, specifically:

A network adapter type of a user terminal that is obtained by the user terminal by using an API of an OPENTCP protocol is an Ethernet adapter, and a network access mode is a fixed IP. The user terminal selects a corresponding congestion control algorithm A from a compiled program according to the fixed IP access mode of the Ethernet adapter, and sends the information to a network server by using options options in an SYN packet. The network server side receives and parses the options options information in the SYN packet to learn that the user terminal uses the fixed IP access mode of the Ethernet adapter.

The network server learns, by querying the API of the OPENTCP protocol, that the network server does not support the congestion control algorithm A, and the network server learns, by querying the API of the OPENTCP protocol, that the fixed IP access mode of the Ethernet adapter is corresponding to a congestion control algorithm B. A programmer compiles in advance congestion control algorithms corresponding to different network adapter types and network access modes by using the API of the OPENTCP protocol. For example, when an Ethernet terminal is used, the network server may select a Cubic congestion control algorithm for use; when a 3G or 4G network is used, the network server may select a Westwood congestion control algorithm for use. This may be specifically determined by means of compilation by the programmer voluntarily.

The network server selects the congestion control algorithm B, and performs TCP transmission after a TCP three-way handshake is complete. During the transmission, the network server may obtain current network status information. When network bandwidth is 1 megabyte, a delay is 100 milliseconds, and a network packet loss rate is 10.00%, a TCP parameter may be dynamically adjusted by calling, according to these parameters, the API of the OPENTCP protocol. The TCP parameter may be an initial congestion window, and a size of the initial congestion window is 1. When the congestion control algorithm B is used, a threshold becomes half a current congestion window value, then a congestion window size is reset to 1, and the network server continues to use the congestion control algorithm B, so as to ensure TCP transmission efficiency.

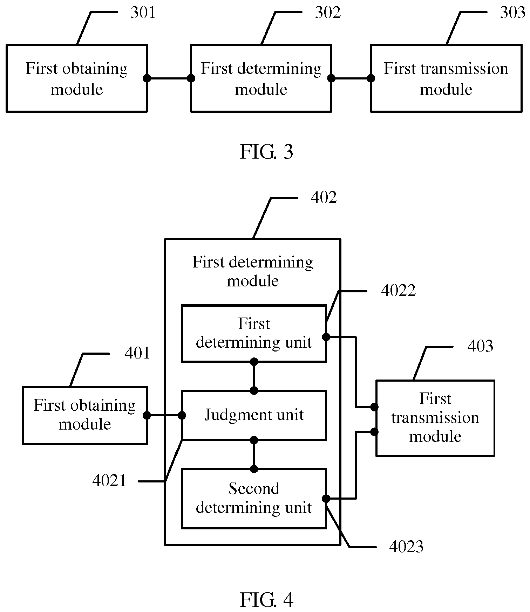

The following describes in detail a network server of the present invention. Referring to FIG. 3, the network server in an embodiment of the present invention includes:
a first obtaining module 301, configured to obtain congestion control algorithm determining information;
a first determining module 302, configured to determine, according to the congestion control algorithm determining information, a congestion control algorithm used in data transmission with the user terminal; and
a first transmission module 303, configured to perform data transmission with the user terminal by using the congestion control algorithm.

In this embodiment, the first obtaining module 301 obtains the congestion control algorithm determining information, the first determining module 302 determines, according to the congestion control algorithm determining information obtained by the first obtaining module 301, the congestion control algorithm used in the data transmission with the user terminal, and the first transmission module 303 performs data transmission with the user terminal by using the congestion control algorithm determined by the first determining module 302.

In this embodiment of the present invention, a network server obtains information sent by a user terminal, and with reference to a congestion control algorithm supported by the network server, selects a congestion control algorithm to be finally used. The network server uses the congestion control algorithm to perform TCP transmission. The network server selects different congestion control algorithms according to different pieces of received information, and performs TCP transmission according to a specific terminal type and network access mode, so as to improve TCP transmission efficiency.

In actual application, in the foregoing embodiments, the congestion control algorithm used in the data transmission with the user terminal may be determined in multiple manners. For ease of understanding, the following separately gives descriptions.

1. The network server determines, according to at least one of a network adapter type of the user terminal, a network access mode of the user terminal, a service requirement of the user terminal, or first network status information, the congestion control algorithm used in the data transmission with the user terminal.

Optionally, on the basis of the embodiment corresponding to FIG. 3, in a first optional embodiment of the network server provided in the embodiments of the present invention, the determining module is specifically configured to: when the congestion control algorithm determining information includes at least one of a network adapter type of the user terminal, a network access mode of the user terminal, a service requirement of the user terminal, or first network status information, determine, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

In addition, the network server in this embodiment may determine, according to the at least one of the network adapter type, the network access mode, the service requirement, or the first network status information, the congestion control algorithm used in the data transmission with the user terminal. In this way, an optimal congestion control algorithm may be flexibly selected according to actual application and a dynamic network to resolve a network congestion problem, so that the solution is more flexible and practical.

2. The network server determines, according to at least one of a type of a congestion control algorithm determined by the user terminal, a network adapter type of the user terminal, a network access mode of the user terminal, a service requirement of the user terminal, or first network status information, a congestion control algorithm used in data transmission with the user terminal.

Referring to FIG. 4, another embodiment of a network server of the present invention includes:
a first obtaining module 401, configured to obtain congestion control algorithm determining information;
a first determining module 402, configured to determine, according to the congestion control algorithm determining information, a congestion control algorithm used in data transmission with the user terminal; and
a first transmission module 403, configured to perform data transmission with the user terminal by using the congestion control algorithm.

The first determining module 402 may further include:
a judgment unit 4021, configured to determine whether a congestion control algorithm determined by the user terminal is supported;
a first determining unit 4022, configured to: when the congestion control algorithm determined by the user terminal is supported, determine that the congestion control algorithm determined by the user terminal is the congestion control algorithm used in the data transmission with the user terminal; and
a second determining unit 4023, configured to: when the congestion control algorithm determined by the user terminal is not supported, determine, according to a correspondence between a congestion control algorithm and at least one of a network adapter type, a network access mode, a service requirement, or first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

In addition, this embodiment provides a method for determining a final congestion control algorithm by determining whether a network server supports a congestion control algorithm selected by a user terminal, so as to improve operability and flexibility of the solution.

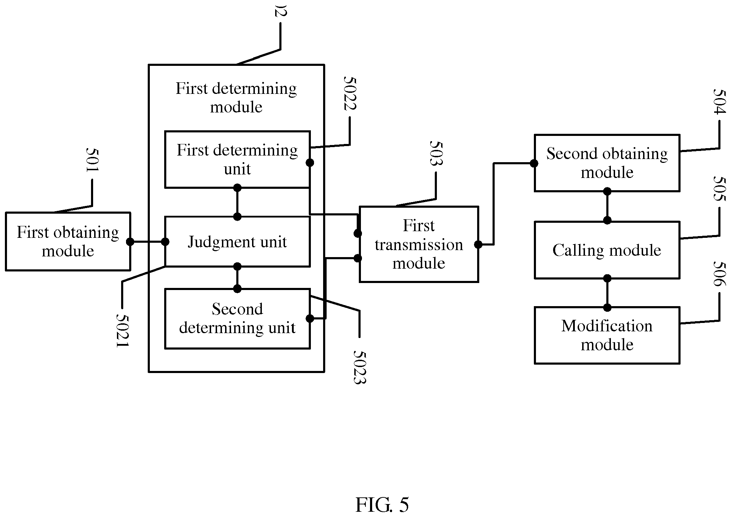

Referring to FIG. 5, another embodiment of a network server of the present invention includes:
a first obtaining module 501, configured to obtain congestion control algorithm determining information;
a first determining module 502, configured to determine, according to the congestion control algorithm determining information, a congestion control algorithm used in data transmission with the user terminal;
a first transmission module 503, configured to perform data transmission with the user terminal by using the congestion control algorithm;
a second obtaining module 504, configured to obtain second network status information on a communication path between the user terminal and the server;
a calling module 505, configured to call an application programming API interface according to the second network status information, where the API interface is used to modify a Transmission Control Protocol TCP parameter; and
a modification module 506, configured to modify the TCP parameter by using the API interface.

The first determining module 502 may further include:
a judgment unit 5021, configured to determine whether a congestion control algorithm determined by the user terminal is supported;
a first determining unit 5022, configured to: when the congestion control algorithm determined by the user terminal is supported, determine that the congestion control algorithm determined by the user terminal is the congestion control algorithm used in the data transmission with the user terminal; and
a second determining unit 5023, configured to: when the congestion control algorithm determined by the user terminal is not supported, determine, according to a correspondence between a congestion control algorithm and at least one of a network adapter type, a network access mode, a service requirement, or first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

Further, in this embodiment, the network server obtains network status information, and modifies a TCP parameter according to the information by using an API interface, so that a network adjustment policy can be determined in time according to the network status information, and the TCP parameter can be dynamically adjusted by using the API interface. In this way, TCP transmission efficiency is improved, the solution can be used more widely, and flexibility is further improved.

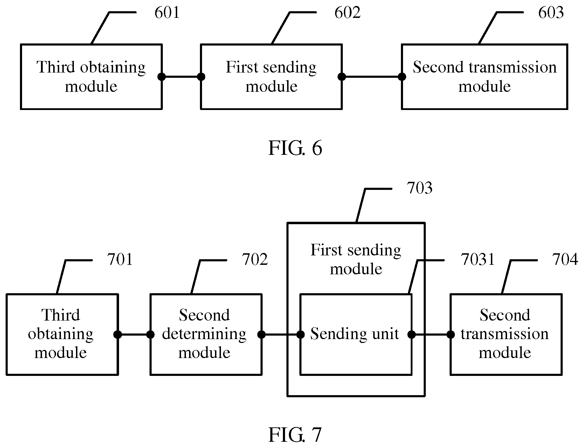

The following describes in detail a user terminal of the present invention. Referring to FIG. 6, the user terminal in an embodiment of the present invention includes:
a third obtaining module 601, configured to obtain at least one of a network adapter type, a network access mode, or a service requirement of the user terminal by using an existing API interface or a newly created API interface;
a first sending module 602, configured to send the at least one of the network adapter type, the network access mode, or the service requirement of the user terminal to a network server, so that the network server determines a congestion control algorithm according to the at least one of the network adapter type, the network access mode, or the service requirement; and
a second transmission module 603, configured to perform data transmission with the network server by using the congestion control algorithm.

In this embodiment, the third obtaining module 601 obtains the at least one of the network adapter type, the network access mode, or the service requirement of the user terminal by using the existing API interface or the newly created API interface, and the first sending module 602 sends, to the network server, the at least one of the network adapter type, the network access mode, or the service requirement of the user terminal that is obtained by the third obtaining module 601, so that the network server determines the congestion control algorithm according to the at least one of the network adapter type, the network access mode, or the service requirement, and the second transmission module 603 performs data transmission with the network server by using the congestion control algorithm.

In this embodiment of the present invention, a user terminal obtains a network adapter type, a network access mode, or a user service requirement of the user terminal by using a newly created API interface or an existing API interface, and sends the information to a network server, so that the network server may determine, according to the information, a congestion control algorithm used in data transmission with the user terminal. The network server selects different congestion control algorithms according to different pieces of network characteristic information of the user terminal, and performs TCP transmission according to a specific network adapter type, a specific network access mode, or a specific user service requirement, so as to improve TCP transmission efficiency.

Referring to FIG. 7, another embodiment of a user terminal in the embodiments of the present invention includes:
a third obtaining module 701, configured to obtain at least one of a network adapter type, a network access mode, or a service requirement of the user terminal by using an existing API interface or a newly created API interface;
a second determining module 702, configured to determine, according to the at least one of the network adapter type, the network access mode, or the service requirement of the user terminal, a congestion control algorithm corresponding to the at least one of the network adapter type, the network access mode, or the service requirement of the user terminal;
a first sending module 703, configured to send the at least one of the network adapter type, the network access mode, or the service requirement of the user terminal to a network server, so that the network server determines the congestion control algorithm according to the at least one of the network adapter type, the network access mode, or the service requirement; and
a second transmission module 704, configured to perform data transmission with the network server by using the congestion control algorithm.

The first sending module 703 may further include:
a sending unit 7031, configured to send the at least one of the network adapter type, the network access mode, or the service requirement of the user terminal, and the corresponding congestion control algorithm to the network server.

In addition, the user terminal in this embodiment of the present invention may determine, according to a network adapter type, a network access mode, and a user service requirement, a congestion control algorithm corresponding to the network adapter type and the network access mode of the user terminal. If a network server supports the congestion control algorithm, the congestion control algorithm is the optimal choice; otherwise, the network server selects a second-optimal congestion control algorithm to perform data transmission. Feasibility of the solution is improved, an actual application effect is better, and TCP transmission efficiency is improved.

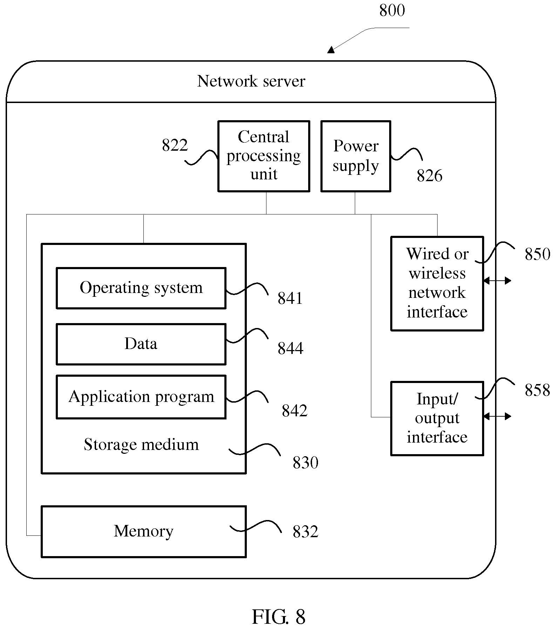

FIG. 8 is a schematic structural diagram of a server according to an embodiment of the present invention. Relatively great differences in the server 800 may be generated because of configuration or performance differences. The server 800 may include one or more central processing units (CPU, central processing units) 822 (for example, one or more processors), one or more memories 832, and one or more storage media 830 (for example, one or more mass storage devices) for storing an application program 842 or data 844. The memory 832 and the storage medium 830 may be transient storage or persistent storage. The program stored in the storage medium 830 may include one or more foregoing modules (which are not shown in the figure), and each module may include a series of instruction operations for the server. Further, the central processing unit 822 may be set to communicate with the storage medium 830, and execute, on the server 800, a series of instruction operations in the storage medium 830.

The server 800 may further include one or more power supplies 826, one or more wired or wireless network interfaces 850, one or more input/output interfaces 858, and/or one or more operating systems 841, such as Windows ServerTM, Mac OS XTM, UnixTM, LinuxTM, or FreeBSDTM.

The steps executed by the server in the foregoing embodiments may be based on the server structure shown in FIG. 8.

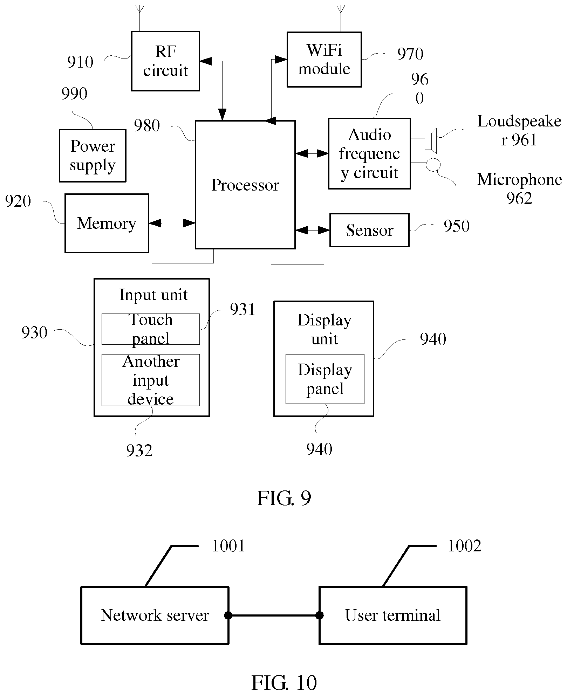

An embodiment of the present invention further provides a user terminal apparatus. As shown in FIG. 9, for ease of description, only a part related to this embodiment of the present invention is illustrated. For specific technical details that are not disclosed, refer to the method of the embodiments of the present invention. The terminal may be any terminal device including: a mobile phone, a tablet computer, a PDA (Personal Digital Assistant, personal digital assistant), a POS (Point of Sales, point of sale), a vehicle-mounted computer, or the like. For example, the terminal is a mobile phone.

FIG. 9 is a block diagram of a partial structure of a mobile phone related to the terminal provided in this embodiment of the present invention. Referring to FIG. 9, the mobile phone includes components such as a radio frequency (Radio Frequency, RF) circuit 910, a memory 920, an input unit 930, a display unit 940, a sensor 950, an audio frequency circuit 960, a Wireless Fidelity (Wireless Fidelity, WiFi) module 970, a processor 980, and a power supply 990. Persons skilled in the art may understand that a structure of the mobile phone shown in FIG. 9 constitutes no limitation on the mobile phone, and instead the mobile phone may include components more or fewer than those shown in FIG. 9, or a combination of some components, or different component arrangements.

The following describes in detail the components of the mobile phone with reference to FIG. 9.

The RF circuit 910 may be configured to receive and send a signal during an information receiving or sending process or a call process, and in particular, after receiving downlink information of a base station, send the downlink information to the processor 980 for processing. In addition, the RF circuit 910 sends designed uplink data to the base station. Generally, the RF circuit 910 includes but is not limited to an antenna, at least one amplifier, a transceiver, a coupler, a low noise amplifier (Low Noise Amplifier, LNA), and a duplexer. In addition, the RF circuit 910 may further communicate with a network and another device by means of wireless communication. The wireless communication may use any communications standard or protocol, which includes but is not limited to Global System for Mobile Communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, or a short message service (Short Messaging Service, SMS).

The memory 920 may be configured to store a software program and a module. The processor 980 performs, by running the software program and the module that are stored in the memory 920, various function applications of the mobile phone and data processing. The memory 920 may mainly include a program storage area and a data storage area. The program storage area may store an operating system, an application program required by at least one function (such as a voice playing function or an image playing function), and the like. The data storage area may store data (such as audio data or a phone book) created according to use of the mobile phone, and the like. In addition, the memory 920 may include a high-speed random access memory, and may further include a nonvolatile memory, such as at least one magnetic disk storage component, a flash memory component, or another volatile solid-state storage component.

The input unit 930 may be configured to receive entered numeral or character information, and generate key signal input related to user settings and function control of the mobile phone. Specifically, the input unit 930 may include a touch panel 931 and another input device 932. The touch panel 931, also referred to as a touchscreen, can collect a touch operation of a user on or near the touch panel 931 (for example, an operation of the user on the touch panel 931 or near the touch panel 931 by using any proper object or accessory such as a finger or a stylus), and drive a corresponding connected apparatus according to a preset program. Optionally, the touch panel 931 may include two parts: a touch detection apparatus and a touch controller. The touch detection apparatus detects a touch position of the user, detects a signal generated by a touch operation, and transfers the signal to the touch controller. The touch controller receives touch information from the touch detection apparatus, converts the touch information into coordinates of a touch point, then sends the coordinates of the touch point to the processor 980, and can receive and execute a command sent by the processor 980. In addition, the touch panel 931 may be implemented by using multiple types, such as a resistive type, a capacitive type, an infrared ray, and a surface acoustic wave. In addition to the touch panel 931, the input unit 930 may further include the another input device 932. Specifically, the another input device 932 may include but is not limited to one or more of a physical keyboard, a function key (for example, a volume control key or an on/off key), a trackball, a mouse, or a joystick.

The display unit 940 may be configured to display information entered by the user or information provided for the user, and various menus of the mobile phone. The display unit 940 may include a display panel 941. Optionally, a form such as a liquid crystal display (Liquid Crystal Display, LCD) and an organic light-emitting diode (Organic Light-Emitting Diode, OLED) may be used to configure the display panel 941. Further, the touch panel 931 may cover the display panel 941. When detecting a touch operation on or near the touch panel 931, the touch panel 931 transfers the touch operation to the processor 980 to determine a type of a touch event, and then the processor 980 provides corresponding visual output on the display panel 941 according to the type of the touch event. In FIG. 9, the touch panel 931 and the display panel 941 are used as two independent components to implement input and output functions of the mobile phone. However, in some embodiments, the touch panel 931 and the display panel 941 may be integrated to implement the input and output functions of the mobile phone.

The mobile phone may further include at least one sensor 950, such as a light sensor, a motion sensor, or another sensor. Specifically, the light sensor may include an ambient light sensor and a proximity sensor. The ambient light sensor may adjust luminance of the display panel 941 according to brightness of ambient light. The proximity sensor may turn off the display panel 941 and/or backlight when the mobile phone moves to an ear. As one type of motion sensor, an accelerometer sensor can detect accelerations in all directions (generally, three axes), can detect a value and a direction of gravity in a static state, and can be used for an application that identifies a mobile phone posture (such as screen orientations, a related game, or magnetometer posture calibration), a function related to vibration identification (such as a pedometer or a stroke), and the like. For another sensor, such as a gyroscope, a barometer, a hygrometer, a thermometer, or an infrared sensor, that can be further disposed on the mobile phone, details are not described herein.

The audio frequency circuit 960, a loudspeaker 961, and a microphone 962 may provide an audio interface between the user and the mobile phone. The audio frequency circuit 960 may transmit, to the loudspeaker 961, an electrical signal obtained after received audio data is converted, and the loudspeaker 961 converts the electrical signal to a sound signal for output. On the other hand, the microphone 962 converts a collected sound signal to an electrical signal. The audio frequency circuit 960 receives the electrical signal, converts the electrical signal to audio data, and outputs the audio data to the processor 980 for processing. The processor 980 sends processed audio data to, for example, another mobile phone by using the RF circuit 910, or outputs the audio data to the memory 920 for further processing.

WiFi belongs to a short-range wireless transmission technology. The mobile phone may help, by using the WiFi module 970, the user send and receive an email, browse a web page, access streaming media, and the like. The WiFi module 970 provides wireless broadband Internet access for the user. Although the WiFi module 970 is shown in FIG. 9, it can be understood that the WiFi module 970 is not a necessity of the mobile phone, and may be omitted as required without changing the essence of the present invention.

The processor 980 is a control center of the mobile phone and is connected to each part of the entire mobile phone by using various interfaces and lines. By running or executing the software program and/or the module that is stored in the memory 920 and by using data stored in the memory 920, the processor 980 performs various functions of the mobile phone and data processing, so as to perform overall monitoring on the mobile phone. Optionally, the processor 980 may include one or more processing units. Preferably, an application processor and a modem processor may be integrated into the processor 980. The application processor mainly processes an operating system, a user interface, an application program, or the like. The modem processor mainly processes wireless communication. It can be understood that the foregoing modem processor may alternatively not be integrated into the processor 980.

The mobile phone further includes the power supply 990 (such as a battery) that supplies power to each part. Preferably, the power supply may be logically connected to the processor 980 by using a power management system, so that functions such as management of charging, discharging, and power consumption are implemented by using the power management system.

Though not shown, the mobile phone may further include a camera, a Bluetooth module, and the like, and details are not described herein.

The following describes a data transmission system in an embodiment of the present invention. Referring to FIG. 10, a data transmission system in this embodiment of the present invention includes:
a network server 1001 and a user terminal 1002.

The network server 1001 obtains congestion control algorithm determining information, determines, according to the congestion control algorithm determining information, a congestion control algorithm used in data transmission with the user terminal 1002, and performs data transmission with the user terminal 1002 by using the congestion control algorithm.

The user terminal 1002 obtains at least one of a network adapter type, a network access mode, or a service requirement of the user terminal 1002 by using an existing API interface or a newly created API interface, and sends the at least one of the network adapter type, the network access mode, or the service requirement of the user terminal 1002 to the network server 1001, so that the network server 1001 determines the congestion control algorithm according to the at least one of the network adapter type, the network access mode, or the service requirement. The user terminal 1002 performs data transmission with the network server 1001 by using the congestion control algorithm.

In this embodiment of the present invention, a network server obtains information sent by a user terminal, and with reference to a congestion control algorithm supported by the network server, selects a congestion control algorithm to be finally used. The network server uses the congestion control algorithm to perform TCP transmission. The network server selects different congestion control algorithms according to different pieces of received information, and performs TCP transmission according to a specific terminal type and network access mode, so as to improve TCP transmission efficiency.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A data transmission method, comprising:
obtaining congestion control algorithm determining information;
determining, according to the congestion control algorithm determining information, a congestion control algorithm used in data transmission with the user terminal; and
performing data transmission with the user terminal by using the congestion control algorithm.

2. The method according to claim 1, wherein when the congestion control algorithm determining information comprises at least one of a network adapter type of the user terminal, a network access mode of the user terminal, a service requirement of the user terminal, or first network status information, the determining, according to the congestion control algorithm determining information, a congestion control algorithm used in data transmission with the user terminal comprises:
determining, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

3. The method according to claim 2, wherein when the congestion control algorithm determining information further comprises a type of a congestion control algorithm determined by the user terminal, the determining, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal comprises:
determining whether the congestion control algorithm determined by the user terminal is supported;
when the congestion control algorithm determined by the user terminal is supported, determining that the congestion control algorithm determined by the user terminal is the congestion control algorithm used in the data transmission with the user terminal; and
when the congestion control algorithm determined by the user terminal is not supported, determining, according to the correspondence between the congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

4. The method according to any one of claims 1 to 3, wherein during the data transmission with the user terminal by using the congestion control algorithm, the method further comprises:
obtaining second network status information on a communication path between the user terminal and a server;
calling an application programming API interface according to the second network status information, wherein the API interface is used to modify a Transmission Control Protocol TCP parameter; and
modifying the TCP parameter by using the API interface.

5. A data transmission method, comprising:
obtaining at least one of a network adapter type, a network access mode, or a service requirement of a user terminal by using an existing API interface or a newly created API interface;
sending the at least one of the network adapter type, the network access mode, or the service requirement of the user terminal to a network server, so that the network server determines a congestion control algorithm according to the at least one of the network adapter type, the network access mode, or the service requirement; and
performing data transmission with the network server by using the congestion control algorithm.

6. The method according to claim 5, wherein after the obtaining at least one of a network adapter type, a network access mode, or a service requirement of the user terminal by using an existing API interface or a newly created API interface, the method further comprises:
determining, according to the at least one of the network adapter type, the network access mode, or the service requirement of the user terminal, a congestion control algorithm corresponding to the at least one of the network adapter type, the network access mode, or the service requirement of the user terminal; and
the sending the at least one of the network adapter type, the network access mode, or the service requirement of the user terminal to a network server comprises:
sending the at least one of the network adapter type, the network access mode, or the service requirement of the user terminal, and the corresponding congestion control algorithm to the network server.

7. A network server, comprising:
a first obtaining module, configured to obtain congestion control algorithm determining information;
a first determining module, configured to determine, according to the congestion control algorithm determining information, a congestion control algorithm used in data transmission with the user terminal; and
a first transmission module, configured to perform data transmission with the user terminal by using the congestion control algorithm.

8. The network server according to claim 7, wherein the determining module is specifically configured to: when the congestion control algorithm determining information comprises at least one of a network adapter type of the user terminal, a network access mode of the user terminal, a service requirement of the user terminal, or first network status information, determine, according to a correspondence between a congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

9. The network server according to claim 8, wherein the first determining module comprises:
a judgment unit, configured to determine whether a congestion control algorithm determined by the user terminal is supported;
a first determining unit, configured to: when the congestion control algorithm determined by the user terminal is supported, determine that the congestion control algorithm determined by the user terminal is the congestion control algorithm used in the data transmission with the user terminal; and
a second determining unit, configured to: when the congestion control algorithm determined by the user terminal is not supported, determine, according to the correspondence between the congestion control algorithm and the at least one of the network adapter type, the network access mode, the service requirement, or the first network status information, that the congestion control algorithm corresponding to the at least one of the network adapter type of the user terminal, the network access mode of the user terminal, the service requirement of the user terminal, or the first network status information is the congestion control algorithm used in the data transmission with the user terminal.

10. The network server according to any one of claims 7 to 9, wherein the network server further comprises:
a second obtaining module, configured to obtain second network status information on a communication path between the user terminal and the server;
a calling module, configured to call an application programming API interface according to the second network status information, wherein the API interface is used to modify a Transmission Control Protocol TCP parameter; and
a modification module, configured to modify the TCP parameter by using the API interface.

11. A user terminal, comprising:
a third obtaining module, configured to obtain at least one of a network adapter type, a network access mode, or a service requirement of the user terminal by using an existing API interface or a newly created API interface;
a first sending module, configured to send the at least one of the network adapter type, the network access mode, or the service requirement of the user terminal to a network server, so that the network server determines a congestion control algorithm according to the at least one of the network adapter type, the network access mode, or the service requirement; and
a second transmission module, configured to perform data transmission with the network server by using the congestion control algorithm.

12. The user terminal according to claim 11, wherein the user terminal further comprises:
a second determining module, configured to determine, according to the at least one of the network adapter type, the network access mode, or the service requirement of the user terminal, a congestion control algorithm corresponding to the at least one of the network adapter type, the network access mode, or the service requirement of the user terminal; and
the first sending module comprises:
a sending unit, configured to send the at least one of the network adapter type, the network access mode, or the service requirement of the user terminal, and the corresponding congestion control algorithm to the network server.

13. A data transmission system, comprising a network server and a user terminal, wherein
the network server is the network server according to any one of claims 7 to 10; and
the user terminal is the user terminal according to any one of claims 11 to 12.
